Europäisches Patentamt

European Patent Office

Office européen des brevets

(11) Veröffentlichungsnummer: **0 407 762 A1**

# EUROPÄISCHE PATENTANMELDUNG

(21) Anmeldenummer: 90111400.9

(22) Anmeldetag: 16.06.90

(51) Int. Cl.⁵: **C08L 23/02**, //(C08L23/02, 23:08,C08K5:09)

(30) Priorität: 28.06.89 DE 3921144

(43) Veröffentlichungstag der Anmeldung:
16.01.91 Patentblatt 91/03

(84) Benannte Vertragsstaaten:
AT BE CH DE ES FR GB IT LI NL SE

(71) Anmelder: **HOECHST AKTIENGESELLSCHAFT**
**Postfach 80 03 20**
**D-6230 Frankfurt am Main 80(DE)**

(72) Erfinder: **Hobes, John, Dr. Dipl.-Chem.**
**Erna Strasse 2b**
**D-4220 Dinslaken(DE)**
Erfinder: **Payer, Wolfgang, Dr. Dipl.-Chem.**
**Zedernweg 58**
**D-4230 Wesel 1(DE)**

(54) Abbaufähige Polymerisatmischungen.

(57) Die vorliegende Erfindung betrifft unter Lichteinwirkung abbaufähige Polymerisatmischungen, die aus einem durch Niederdrucksynthese hergestellten Polyolefin, einem Ethylen, Kohlenmonoxid und gegebenenfalls weitere polymerisierbare Bestandteile enthaltenden Mischpolymerisat und geringen Mengen eines Carbonsäuresalzes eines Elementes der Ordnungszahl 22 bis 58 bestehen. Die Polymerisatmischung weist 0,5 bis 5 Gew.-% Kohlenmonoxid auf. Durch das Vorhandensein sowohl des Kohlenmonoxid enthaltenden Mischpolymerisats als auch des Carbonsäuresalzes wird die Abbaufähigkeit der resultierenden Mischung verbessert.

EP 0 407 762 A1

EP 0 407 762 A1

## ABBAUFÄHIGE POLYMERISATMISCHUNGEN

Die vorliegende Erfindung betrifft unter Lichteinwirkung abbaufähige Polymerisatmischungen, ein Verfahren zu ihrer Herstellung und ihre Verwendung als Folienmaterial.

Kunststoffe werden in stetig zunehmendem Umfang für die verschiedensten Anwendungszwecke in Industrie, Handel und Gewerbe eingesetzt. Sie haben sich insbesondere als Verpackungsmaterial sehr gut bewährt. Allerdings steht den zahlreichen Vorzügen, die Kunststoffe im Vergleich zu anderen Werkstoffen aufweisen, ein Nachteil, nämlich die geringe Abbaufähigkeit gegenüber. Kunststoffe bleiben lange Zeit unverändert, ehe sie verwittern. In den meisten Fällen erfolgt ein Abbau nur sehr langsam.

Nur einige wenige Kunststoffe werden bei der Lagerung im Freien, in Deponien oder bei Kompostierung durch dabei ablaufende biologische, chemische, thermische oder fotochemische Prozesse in nennenswertem Maße angegriffen. Hierzu gehören einige halbsynthetische Celluloseester und bestimmte aliphatische Polyester.

Sehr häufig verwendete Massenkunststoffe wie Polyolefine widerstehen jedoch derartigen Abbauvorgängen weitgehend und verrotten nur sehr langsam. Für die Umwelt stellen sie daher eine nicht unerhebliche Belastung dar.

Eine zusammenfassende, Polyolefine betreffende Darstellung findet sich in Ullmanns Encyklopädie der technischen Chemie 4. Auflage, Verlag Chemie Weinheim-Basel 1980, Band 19, Seiten 167 bis 226.

Es hat in der Vergangenheit nicht an Versuchen gefehlt, Polyolefin enthaltende Kunststoffe herzustellen, die unter Lichteinwirkung bzw. den Bedingungen der Kompostierung abgebaut werden.

Die DE-OS 21 36 704 beschreibt thermoplastische Kunststoffmassen deren Abbaufähigkeit aus dem Zusatz eines nichtionischen, insbesondere Schwefel enthaltenden Komplexes eines Metalles der Ordnungszahl 22 bis 29, 40 bis 47 oder 57 bis 79 resultiert.

Die DE-OS 26 16 257 behandelt durch Licht abbaubare Polymermassen, die wenigstens ein Polymeres und wenigstens ein Eisen(II)salz enthalten. Das Eisen wird in Form eines Carbonsäuresalzes mit einer Alkylkette von wenigstens 6 Kohlenstoffatomen, wobei die Alkylkette in 2, 3, 4 oder 5 Stellung eine weitere funktionelle Gruppe enthält, zugesetzt. Als Polymere können Polyethylen, Polystyrol sowie verschiedene Comonomere auf Basis Ethylen oder Styrol eingesetzt werden.

Die DE-OS 23 16 697 betrifft eine durch Einwirken von ultravioletter Bestrahlung fotozersetzbare Polymersubstanz, die aus einem üblichen Ethylenhomopolymerisat oder Ethylencopolymerisat und einem Ethylen-Kohlenmonoxid-Copolymerisat besteht, wobei diese Mischung 0,1 bis etwa 15 Gew.-% durch Einpolymerisieren von Kohlenmonoxid erzeugte Carbonylgruppen bezogen auf die gesamte Polymersubstanz enthält.

Die bekannten, abbaufähigen Polymerisatmischungen sind entweder auf die Verwendung ganz bestimmter Kunststoffe beschränkt oder an den Zusatz spezieller, schwer zugänglicher Metallverbindungen gebunden. Zu dem erweist sich auch das Abbauverhalten dieser Stoffe häufig als verbesserungsbedürftig.

Daher bestand ein Bedarf nach abbaufähigen Polymerisatmischungen, die erstens generell Polyolefine, die durch Niederdrucksynthese hergestellt werden, einbeziehen und somit die diese Polymeren auszeichnenden Eigenschaften nutzen, die zweitens leicht zugänglich sind und drittens eine gute Abbaufähigkeit besitzen.

Die zuvor erläuterten Nachteile werden beseitigt durch unter Lichteinwirkung abbaufähige Polymerisatmischungen bestehend aus (a) einem durch Niederdrucksynthese hergestellten Polyolefin und (b) einem Ethylen, Kohlenmonoxid und gegebenenfalls weitere polymerisierbare Bestandteile enthaltenden Mischpolymerisat in einer solchen Menge, daß die Polymerisatmischung 0,5 bis 5 Gew.-% Kohlenmonoxid aufweist, und (c) 10 bis 150 ppm eines Carbonsäuresalzes eines Elementes der Ordnungszahl 22 bis 58.

Die erfindungsgemäßen Polymerisatmischungen weisen folgende Vorteile auf. Sie erstrecken sich erstens generell auf durch Niederdrucksynthese hergestellte Polyolefine. Sie sind zweitens leicht zugänglich, da sie aus üblichen, in technischen Mengen verfügbaren Komponenten bestehen, die lediglich miteinander zu vermischen und gegebenenfalls zu verarbeiten sind. Sie decken darüberhinaus ein sehr weites Anwendungsfeld ab, da ihre Abbaufähigkeit sowohl über den Kohlenmonoxidanteil als auch über die Menge des zugesetzten Carbonsäuresalzes beeinflußt werden kann. Dies wiederum wirkt sich in einer größeren Variationsmöglichkeit des Verhältnisses Polyolefin zu dem Kohlenmonoxid enthaltenden Mischpolymerisat aus. Dadurch wird es möglich, unter Einhalten einer bestimmten Abbaufähigkeit die übrigen Eigenschaften wie Zähigkeit, Reißfestigkeit, Transparenz, Dehnverhalten oder Ausziehfähigkeit zu variieren. Umgekehrt bereitet es keine Schwierigkeiten, beispielsweise eine bestimmte Zähigkeit oder Reißfestigkeit vorzugeben und die Abbaufähigkeit nach Wunsch einzustellen.

Zum dritten zeichnen sich die erfindungsgemäßen Polymerisatmischungen durch eine verbesserte

2

Abbaufähigkeit aus, weil überraschenderweise der Kohlenmonoxidanteil und der Carbonsäuresalzgehalt hinsichtlich des Abbauverhaltens nicht additiv wirken, sondern einen über die Wirkung der Einzelkomponenten hinausgehenden, synergistischen Effekt erzielen.

Die abbaufähigen Polymerisatmischungen bestehen aus 75 bis 95 Gew.-% des Polyolefins und 5 bis 25 Gew.-% des Kohlenmonoxid enthaltenden Mischpolymerisats.

Unter Polyolefinen versteht man Polymerisationsprodukte von Alkenen, insbesondere Polyethylen hoher Dichte, Polypropylen, Polybuten, Polyisobuten und Poly(4-methyl-1-penten), aber auch Polycycloolefine, die unter Ringöffnung zu Polyolefinen polymerisieren (Vergl. Calderon, Rev. Macromol. Chem. 8(1972) 105 bis 109).

Gut geeignete Polyolefine sind Polyethylene hoher Dichte, Polypropylen, Polyisobuten, insbesondere Polyethylene hoher Dichte und Polypropylen.

Die Herstellung (Niederdrucksynthese) dieser Polyolefine erfolgt durch Umsetzung des Monomeren bzw. der Monomerengemische bei 0,1 bis 4,0 MPa und 20 bis 100°C üblicherweise in Gegenwart von Katalysatoren, die aus einer metallorganischen Verbindung eines Elementes der 3. Gruppe des Periodensystems der Elemente und einer Titanverbindung bestehen (sogenannte Ziegler- oder Ziegler-Natta-Katalysatoren). (Vergl. Ullmanns Encyklopädie der techn. Chemie, Verlag Chemie Weinheim-Basel 1980, Band 19, Seite 183 bis 185, 198 bis 202, 211 bis 212, 219 bis 220).

Die Niederdruck-Polymerisation (Niederdrucksynthese) wird unter einem Druck von 0,1 bis 4,0, insbesondere 0,2 bis 2,0, bevorzugt 0,5 bis 1,0 MPa durchgeführt. Die Polymerisationstemperatur beträgt 20 bis 100, insbesondere 40 bis 95, bevorzugt 60 bis 90°C.

Das Ethylen, Kohlenmonoxid und gegebenenfalls weitere polymerisierbare Bestandteile enthaltende Mischpolymerisat besteht aus 60 bis 96, insbesondere 65 bis 92, bevorzugt 70 bis 90 Gew.-Teilen Ethylen, 5 bis 20, insbesondere 7 bis 15, bevorzugt 8 bis 14 Gew.-Teilen CO und gegebenenfalls 1 bis 18, insbesondere 2 bis 15, bevorzugt 3 bis 12 Gew.-Teilen eines weiteren Monomeren. Als weiteres Monomeres sind Vinylester, Vinylether und Ester der Acrylsäure oder Methacrylsäure und einem aliphatischen $C_1$ bis $C_8$-Alkohol zu nennen. Besonders geeignet sind Vinylacetat, Meth 1-, Ethyl- oder Butyl-acrylat.

Die Herstellung dieser Mischpolymerisate erfolgt durch Umsetzung des Monomeren bzw. der Monomerengemische bei 50 bis 350 MPa und 100 bis 350°C in Gegenwart von Sauerstoff oder Radikale bildenden Verbindungen (sogenannte Hochdrucksynthese). Hierzu wird eine aus Ethylen, CO und gegebenenfalls einem weiteren Monomeren bestehende Mischung polymerisiert.

Die Polymerisation wird unter einem Druck von 50 bis 350, insbesondere 100 bis 300, bevorzugt 125 bis 275 MPa durchgeführt. Die Polymerisationstemperatur beträgt 100 bis 350°C, insbesondere 120 bis 325, bevorzugt 130 bis 300°C.

Als Polymerisationsinitiatoren werden Sauerstoff oder Radikale bildende Verbindungen eingesetzt. Zu den Radikale bildenden Verbindungen zählen organische Peroxide, Hydroperoxide oder Azoverbindungen. Bewährt haben sich Peroxide der Klassen Diacylperoxide, Peroxydicarbonate, Alkylperester, Perketale, Dialkylperoxide, Ketonperoxide und Alkylhydroperoxide.

Die Radikale bildenden Verbindungen können allein oder im Gemisch verwendet werden. Die Polymerisationsinitiatoren werden in einer Konzentration von 3 bis 50, vorzugsweise 5 bis 40, insbesondere 10 bis 25 Gew.-ppm, bezogen auf Ethylen, eingesetzt. Man führt sie der Polymerisation direkt oder als Lösung in einem organischen Löungsmittel zu. Als Lösungsmittel dienen Kohlenwasserstoffe wie Isooctan, Benzol, Toluol oder Benzinfraktionen. Die Verweilzeit des Monomerengemisches in der Polymerisationsstufe beträgt 30 bis 180, insbesondere 50 bis 160 und bevorzugt 60 bis 140 sek.

Die Umsetzung kann in den für die Polymerisation von Ethylen und Ethylen enthaltenden Monomerengemischen bekannten Hochdruckreaktoren erfolgen. Hierzu gehören Rührautoklaven und Rohrreaktoren (vgl. Ullmanns Encyklopädie der Technischen Chemie, 4. Auflage, Verlag Chemie Weinheim-Basel 1980, Band 19, Seite 169, 172 bis 175). Bei Verwendung eines Rohrreaktors kann das gesamte, bereits Initiatoren enthaltende Monomerengemisch in einem Strom dem Reaktor zugeführt werden. Besonders vorteilhaft ist es jedoch, einen Rohrreaktor mit Kaltgas- und Initiatornachdosierung zu verwenden und das Monomerengemisch in mindestens zwei Teilströme aufzuteilen. Hierbei wird ein Teilstrom dem Reaktoreingang zugeführt, weitere Teilströme werden längs des Reaktors, meist im Bereich einer Spitzentemperatur, der Reaktionszone zugeleitet.

Die Mischpolymerisate lassen sich durch Polymerisation der entsprechenden Monomermischungen unter den bereits vorstehend aufgeführten Reaktionsbedingungen herstellen. Ihre Synthese ist auch in der DE-AS 23 01 889 beschrieben.

Man setzt das Kohlenmonoxid enthaltende Mischpolymerisat in einer solchen Menge ein, daß die erfindungsgemäße Polymerisatmischung 0,5 bis 5, insbesondere 0,7 bis 4,0, bevorzugt 1,0 bis 3,0 Gew.-% Kohlenmonoxid (in einpolymerisierter Form) aufweist.

3

Als dritte Komponente enthält die Polymerisatmischung 10 bis 150, insbesondere 15 bis 120, bevorzugt 20 bis 100 ppm eines Carbonsäuresalzes eines Elementes der Ordnungszahl 22 bis 58, insbesondere 22 bis 48, bevorzugt 24 bis 30. Gut geeignet sind Carbonsäuresalze des Cers, Vanadins, Chroms, Mangans, Eisens, Kobalts, Nickels und Kupfers, besonders bewährt haben sioh Carbonsäuresalze des Cers, Eisens oder Kobalts. In vielen Fällen haben sich Carbonsäuresalze des Eisens oder des Cobalts, insbesondere des Eisens als besonders geeignet erwiesen.

Es lassen sich Salze aliphatischer, cycloaliphatischer, araliphatischer und/oder aromatischer Carbonsäuren, insbesondere aliphatischer Carbonsäuren mit 4 bis 14 C-Atomen verwenden.

Unter den Salzen aliphatischer Carbonsäuren sind Salze der Mono- und Dicarbonsäuren mit 4 bis 14 C-Atomen, insbesondere Salze der 2-Ethylhexansäure, der Isononansäure (hergestellt durch Hydroformylierung von Diisobutylen und nachfolgende Oxidation des Hydroformylierungsproduktes), Isotridecansäure (hergestellt durch Hydroformylierung von Tetrapropylen und nachfolgende Oxidation des Hydroformylierungsproduktes), der Adipinsäure, Maleinsäure, Fumarsäure, Itaconsäure, bevorzugt Salze der 2-Ethylhexansäure hervorzu-heben. Aber auch Salze aromatischer Carbonsäuren, wie Benzoesäure, Salicylsäure, Phthalsäure $\alpha$- oder $\beta$-Naphthoesäure, lassen sich verwenden.

Die Polymerisatmischungen stellt man her, indem man die einzelnen Komponenten, nämlich das Polyolefin, das Kohlenmonoxid enthaltende Mischpolymerisat und das Carbonsäuresalz unter Vermischung bis zum Schmelzen erwärmt und gegebenenfalls extrudiert. Für die Extrusion lassen sich handelsübliche Extruder wie Doppelschneckenextruder gebrauchen.

Aufgrund ihrer besonderen Eigenschaften - zu erwähnen sind die Transparenz, Steifigkeit, Glanz, Zähigkeit, Reißfestigkeit - sind die Polymerisatmischungen vorzüglich als Folienmaterial zu verwenden.

Die nachfolgend im experimentellen Teil beschriebenen Beispiele belegen die vorliegende Erfindung, ohne sie zu beschränken.

Experimenteller Teil

Herstellung der abbaufähigen Polymerisatmischungen

Als Einzelkomponenten werden das durch Niederdrucksynthese hergestellte Polyolefin (a), das Ethylen, Kohlenmonoxid und gegebenenfalls weitere polymerisierbare Bestandteile enthaltende Mischpolymerisat (b) und das Carbonsäuresalz (c) verwendet. Man vermischt die Einzelkomponenten in einem Verhältnis, daß in der Polymerisatmischung der gewünschte CO-Gehalt erreicht wird, erhitzt auf eine oberhalb des Schmelzbereiches liegende Temperatur von etwa 130 bis 160 °C und extrudiert.

Die für den Bestrahlungsversuch vorgesehenen Proben weisen bereits die für die Bestimmung des Restwertes der Schlagzugzähigkeit erforderliche Form auf.

Bestrahlungsversuch

Der Einfluß der Lichteinwirkung auf das Abbauverhalten der Proben wird mittels eines Schnellbelichtungs-Tischgerätes (Bezeichnung Original: Hanau Suntest; Handelsprodukt der Firma Heraeus) bestimmt. Die Bestrahlungstärke beträgt im Wellenbereich zwischen 300 und 800 nm (Globalstrahlung) 820 W/m². Die Beleuchtungsstärke liegt bei circa 150 kLux. Die Strahlung wird bei 280 nm (1 nm = $10^{-9}$ m) begrenzt.

Als Maß für die Abbaufähigkeit der zu untersuchenden Probe dient die Verringerung der Schlagzugzähigkeit, die nach einem normierten Verfahren (DIN 53 448) ermittelt wird. Die Proben werden als hinreichend abgebaut angesehen, sobald die Schlagzugzähigkeit auf einen Restwert $\leq 50$ % der ursprünglichen Schlagzugzähigkeit abgesunken ist. Die hierfür erforderliche Bestrahlungsdauer ist die Versprödungszeit.

Die erzielten Ergebnisse sind in der nachfolgenden Tabelle zusammengestellt. Die Beispiele A und B sind Vergleichsversuche, die Beispiele 1 bis 7 betreffen erfindungsgemäße Polymerisatmischungen. Unter Ausgangsstoff sind die Einzelkomponenten, nämlich das Polyolefin $(a_1)$ und $(a_2)$, das Mischpolymerisat $(b_1)$, $(b_2)$ und $(b_3)$ sowie das Carbonsäuresalz $(c_1)$, $(c_2)$ $(c_3)$ und $(c_4)$ aufgeführt. Die untersuchten Polymerisatmischungen sind durch Angabe des Kohlenmonoxid-, des Carbonsäuresalz-Gehaltes und der Versprödungszeit charakterisiert.

Tabelle

| | | | | | |
|---|---|---|---|---|---|
| **Polymerisatmischung** | | | | | |
| Beispiel | Ausgangsstoff | | | CO-Gehalt (Gew.-%) | Carbonsäuresalz (ppm) | Versprödungszeit (Stunden) |



| Beispiel | Ausgangsstoff | | | CO-Gehalt (Gew.-%) | Carbonsäuresalz (ppm) | Versprödungszeit (Stunden) |
|---|---|---|---|---|---|---|
| A | $a_1$ | - | - | - | - | 504 |
| 1 | $a_1$ | $b_1$ | $c_1$ | 1,25 | 100 | 48 |
| 2 | $a_1$ | $b_1$ | $c_2$ | 1,25 | 100 | 96 |
| B | $a_2$ | - | - | - | - | 672 |
| 3 | $a_2$ | $b_2$ | $c_1$ | 0,8 | 100 | 168 |
| 4 | $a_2$ | $b_2$ | $c_1$ | 1,6 | 100 | 96 |
| 5 | $a_2$ | $b_2$ | $c_1$ | 2,3 | 100 | 60 |
| 6 | $a_2$ | $b_3$ | $c_3$ | 2,0 | 100 | 72 |
| 7 | $a_2$ | $b_3$ | $c_4$ | 2,0 | 100 | 60 |

$a_1$ = Polypropylenhomopolymerisat MFI (190/5) = 2 g/10 min, d = 0,903; Verkaufsprodukt der Hoechst AG : Bezeichnung Hostalen PPK 1060 F

$a_2$ = Polyethylenhomopolymerisat MFI (190/5) = 0,40 g/10 min, d = 0,943; Verkaufsprodukt der Hoechst AG : Bezeichnung Hostalen GM 5050

$b_1$ = Ethylen-Kohlenmonoxid-Mischpolymerisat mit 13,8 Gew.-% CO, MFI (190/2,16) = 3,0 g/10 min

$b_2$ = Ethylen-Kohlenmonoxid-Mischpolymerisat mit 18 Gew.-% CO, MFI (190/2,16) = 20 g/10 min

$b_3$ = Ethylen-Kohlenmonoxid-Mischpolymerisat mit 16 Gew.-% CO, MFI (190/2,16) = 3,3 g/10 min

$c_1$ = Fe-2-ethylhexanoat;

$c_2$ = Ce-2-ethylhexanoat;

$c_3$ = Co-isononanoat;

$c_4$ = Fe-isononanoat

## Ansprüche

1. Unter Lichteinwirkung abbaufähige Polymerisatmischungen bestehend aus (a) einem durch Niederdrucksynthese hergestellten Polyolefin und (b) einem Ethylen, Kohlenmonoxid und gegebenenfalls weitere polymerisierbare Bestandteile enthaltenden Mischpolymerisat in einer solchen Menge, daß die Polymerisatmischung 0,5 bis 5 Gew.-% Kohlenmonoxid aufweist, und (c) 10 bis 150 ppm eines Carbonsäuresalzes eines Elementes der Ordnungszahl 22 bis 58.

2. Polymerisatmischungen nach Anspruch 1, dadurch gekennzeichnet, daß sie aus 75 bis 95 Gew.-% des Polyolefins und 5 bis 25 Gew.-% des Kohlenmonoxid enthaltenden Mischpolymerisats besteht.

3. Polymerisatmischungen nach einem der Ansprüche 1 und 2, dadurch gekennzeichnet, daß das Polyolefin Polyethylen hoher Dichte, Polypropylen, Polybuten, Polyisobutylen und Poly(4-methyl-1-penten) ist.

4. Polymerisatmischungen nach einem oder mehreren der Ansprüche 1 bis 3, dadurch gekennzeichnet, daß das Kohlenmonoxid enthaltende Mischpolymerisat aus 60 bis 96 Gew.-Teilen Ethylen, 5 bis 20 Gew.-Teilen Kohlenmonoxid und gegebenenfalls 1 bis 18 Gew.-Teilen eines weiteren Monomeren besteht.

5. Polymerisatmischungen nach einem oder mehreren der Ansprüche 1 bis 4, dadurch gekennzeichnet, daß sie ein Carbonsäuresalz des Cers, Eisens oder Kobalts enthalten.

6. Polymerisatmischungen nach einem oder mehreren der Ansprüche 1 bis 4, dadurch gekennzeichnet, daß sie ein Carbonsäuresalz des Eisens enthalten.

7. Verfahren zur Herstellung der Polymerisatmischungen, dadurch gekennzeichnet, daß das Polyolefin, das Kohlenmonoxid enthaltende Mischpolymerisat und das Carbonsäuresalz unter Vermischen bis zum Schmelzen erwärmt und gegebenenfalls extrudiert werden.

8. Verwendung der Polymerisatmischungen als Folienmaterial.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 230 143 (THE DOW CHEMICAL) <br> * Zusammenfassung; Seite 3, Zeilen 33-37; Seite 4, Zeile 50 - Seite 5, Zeile 2 * <br> – – – | 1-8 | C 08 L 23/02 <br> C 08 L 73/00 <br> C 08 K 5/09 // <br> (C 08 L 23/02 |
| X | US-A-3 676 401 (J.W. HENRY) <br> * Patentanspruch 1; Spalte 4, Zeilen 5-55 * <br> – – – – – | 1-8 | C 08 L 23:08 <br> C 08 K 5:09 ) <br> (C 08 L 23/02 <br> C 08 L 73:00 <br> C 08 K 5:09 ) |

RECHERCHIERTE SACHGEBIETE (Int. Cl.5)

C 08 L
C 08 K

Der vorliegende Recherchenbericht wurde für alle Patentansprüche erstellt

| Recherchenort | Abschlußdatum der Recherche | Prüfer |
|---|---|---|
| Den Haag | 12 November 90 | GOOVAERTS R.E. |